# EUROPEAN PATENT APPLICATION

(11) **EP 4 169 753 A1**
(43) Date of publication of application: **26.04.2023**
(21) Application number: 22202826.8
(22) Date of filing: 20.10.2022
(51) Int. Cl.: B60H 1/00, B60H 1/24

(54) **HVAC SYSTEM FOR A VEHICLE CABIN**

(30) Priority: 20.10.2021 GB 202114989
(71) Applicant: Jaguar Land Rover Limited, Coventry, Warwickshire CV3 4LF (GB)
(72) Inventor: Canning, Kate, Coventry, CV3 4LF (GB); Fowler, Andrew, Coventry, CV3 4LF (GB)
(74) Representative: Holmes, Matthew William

(57) **Abstract**

A HVAC system for a vehicle cabin, which comprises a direct vent (22, 24) for directing air towards an occupant of the vehicle cabin, an indirect vent (27, 29) for introducing an air flow into the vehicle cabin, the air flow not being directly incident on an occupant of the vehicle cabin, and an electronic controller responsive to a user input to adjust a relative proportion of airflow through the direct vent (22, 24) and the indirect vent (27, 29) while substantially maintaining the combined rate of airflow through the direct vent (22, 24) and the indirect vent (27, 29).

## Description

### TECHNICAL FIELD

The present disclosure relates to a HVAC system for a vehicle cabin, a method of controlling a HVAC system and to a vehicle with such a system.

### BACKGROUND

Modern vehicles are commonly provided with a HVAC (Heating, Ventilation and Air Conditioning) system for their vehicle cabin. The HVAC is able to control the temperature within the vehicle cabin (that is, to heat it, or cool it), and to direct streams or jets of heated or cooled air into or onto desired regions and/or surfaces within the vehicle cabin, such as the windscreen (to provide a demisting function) or onto the face, body or feet of an individual sat in the vehicle cabin, or just generally into the cabin volume to promote air movement and vary cabin temperature. For example, air may be directed into the front footwells, into the central area of the cabin, or onto the upper body or face of the driver.

The HVAC, also referred to as a climate control system, relies on air vents in the cabin, for example in/on/over/under the instrument panel (dashboard), in the doors or elsewhere, to maintain occupant thermal comfort. The face level vents, generally provided in the instrument panel, deliver the most noticeable airflow for the user (driver or front passenger(s)) and so are usually equipped with functions for the user to adjust the direction (onto or away from their face for example), and to throttle the output of the vents to their preference. This function allows the user good control of the upper cabin airflow, but it also causes potential issues. In particular throttling multiple vents causes an issue for the automatic climate control system, since it may not be able deliver an adequate level of heating or cooling via the number of vents left open by the user. This issue is especially significant when the function is provided by a mechanical shut off which cannot generally provide the automatic climate control system with feedback of vent throttle status.

Even where feedback of vent status could be provided, where the airflow is significantly throttled by the user on all or most outlets it is difficult for the climate system to provide large cabin cooling provision. Cooling via foot level or screen level outlets is not a suitable substitute in most cases.

Some existing HVAC systems use electronic vent shut offs, and use this to know the vent shut off status and thereby manage airflow to maintain consistent output at open vents.

Some existing HVAC systems have previously provided air vents on the top of the dashboard / instrument panel to supplement upper cabin airflow.

It is an aim of the present invention to provide an improved facility for HVAC in which the aforementioned problems are avoided, or at least ameliorated.

### SUMMARY OF THE INVENTION

Aspects and embodiments of the invention provide a HVAC system for a vehicle cabin, a method of controlling a HVAC system, to a vehicle cabin with such a system, and to a vehicle with such a cabin. The vehicle cabin is preferably a cabin of an automobile, but may instead be for a lorry or other commercial vehicle, a maritime vessel or an aircraft.

According to an aspect of the present invention there is provided a HVAC system for a vehicle cabin, comprising:
a direct vent for directing air towards an occupant of the vehicle cabin and an indirect vent for introducing an air flow into the vehicle cabin, the air flow not being directly incident on an occupant of the vehicle cabin; and
an electronic controller, responsive to a user input to adjust a relative proportion of airflow through the direct vent and the indirect vent while substantially maintaining the combined rate of airflow through the direct vent and the indirect vent.

By providing a combination of (linked) direct and indirect vents, and controlling them as a pair in this way, it is possible to provide a user (driver/front passenger) with the facility to control airflow which impacts them directly, while maintaining an overall flow rate which enables the system to maintain a desired temperature.

The adjustment may comprise increasing a rate of air flow through one of the direct vent and the indirect vent, and correspondingly decreasing a rate of air flow through the other of the direct vent and the indirect vent.

The increase in rate of airflow may be achieved by opening the vent and the decrease in rate of airflow achieved by closing the vent.

The indirect vent may be disposed on a top (for example, horizontal) portion/surface of an instrument panel of the vehicle cabin, and releases air generally upwardly into the vehicle cabin.

The HVAC system may comprise an electronic user interface for entering the user input, the user interface having a user input element visually associated with the direct vent, the user input element providing a facility to adjust airflow through the direct vent. In contrast, the user interface may lack a user input element visually associated with the indirect vent. In this case, the airflow through the indirect vent is not directly controllable by the user through the user interface. In some implementations the user interface may still indicate a current state (air output level) of the indirect vent (as well as the direct vent), with the result that the user can readily see the influence on the indirect vent output of adjusting the direct vents.

The direct vent and the indirect vent may be adjustable between a setting in which substantially all of the combined airflow rate from the direct vent and the indirect vent is through the direct vent and a setting in which substantially all of the combined airflow rate from the direct vent and the indirect vent is through the indirect vent. Alternatively, there may be a fixed and non-zero minimum airflow through the indirect vent, or a non-fixed non-zero minimum airflow through the indirect vent which is set automatically by the system.

The electronic controller may be responsive to an automated temperature adjustment request to adjust the rate of air flow through the indirect vent without substantially adjusting the rate of airflow through the direct vent. In this way the driver or front passenger is not surprised by a change of air flow (onto their face for example) which they are not expecting, and did not request.

The temperature adjustment may be achieved by increasing the blower speed while partially closing the direct vents to maintain the rate of airflow through the direct vent. By closing the vent, it is simply meant that the air throughput provided by the blower is throttled (reduced) by some means, utilising one or more mechanical features disposed somewhere in/along an air path between the blower and the vent outlet.

The automated temperature adjustment request may be generated in response to a detected change in solar load on the vehicle. A change in solar load can quickly increase (for example) the vehicle cabin temperature, which the driver may not notice immediately. By automating a response of the HVAC system in response to solar load, occupant comfort can be maintained without increasing the airflow from a direct vent directly onto a driver/passenger.

Alternatively, the automated temperature adjustment request may be generated in response to a temperature change in the vehicle cabin. This will result in a slower response than monitoring for changes in solar load, but is still an operable solution.

The direct vent and the indirect vent may be part of a first group of vents, the first group of vents additionally comprising one or more further direct vents and/or one or more further indirect vents.

Airflow through the first group of vents may be driven by a common blower. Other groups of vents may be driven by the same blower, or different blower(s).

The HVAC system may comprise a second group of vents for introducing air into a bottom portion of the vehicle cabin and/or a third group of vents for directing air onto an interior of a windscreen of the vehicle.

Preferably, the airflow rate through the indirect vent cannot be adjusted to zero unless the total air flow through the first group of vents is zero, or unless the air flow rate through the corresponding direct vent is at a maximum value.

Preferably the airflow rate through the indirect vent cannot be manually adjusted independently of the airflow rate of the (linked) direct vent. As discussed elsewhere though, automated adjustment may be possible.

Preferably, during manual adjustment of the vents, airflow rate through the indirect vent is substantially inversely proportional to the airflow rate through the direct vent for a given blower speed. This is different to conventional systems, where closing one vent may influence vent outputs of other vents driven by the same blower, but not cause an inverse proportional change (due to airflow losses).

The electronic controller may be operable in a plurality of air distribution modes, each air distribution mode utilising one or more of the first and/or second and/or third groups of vents. The electronic controller may be configured, when initiating a predetermined cooling mode, to override the current direct vent airflow settings and set the direct vent airflow rate to a maximum value. Then, when exiting the predetermined cooling mode, the electronic controller returns the direct vent airflow settings to the state they were in prior to the maximum cooling mode being initiated.

The electronic controller may be configured, while in a predetermined cooling or heating mode, to inhibit user intervention to reduce airflow through the direct vent. Generally though, in any special modes where there is airflow provided to the direct/indirect vents, the vent adjustment controls will be available via the user interface. Adjusting a vent control during the special mode will generally supersede the previous memory position for that control.

According to another aspect of the present invention, there is provided a vehicle comprising a HVAC system according to the above.

According to another aspect of the present invention, there is provided a method of controlling a HVAC system having a direct vent for directing air towards an occupant of the vehicle cabin and an indirect vent for introducing air into the vehicle cabin without directly impacting an occupant of the vehicle cabin, the method comprising:
responsive to a user input, adjusting a relative proportion of airflow through the direct vent and the indirect vent while substantially maintaining the combined rate of airflow through the direct vent and the indirect vent.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a vehicle in which the invention may be used;
Figure 2 shows paired direct and indirect vents;
Figure 3 shows the vents of Figure 2 relative to a driver and front occupant (Row 1) of a vehicle;
Figure 4 shows an illustrative duct configuration;
Figure 5 is a schematic block diagram of the HVAC system;
Figure 6 shows an example user interface for the HVAC system;
Figures 7A and 7B show an example adjustment of the direct and indirect vent states in response to a particular special cooling mode being entered; and
Figures 8A to 8C are schematic flow diagrams illustrative of the method of controlling the vents.

### DETAILED DESCRIPTION

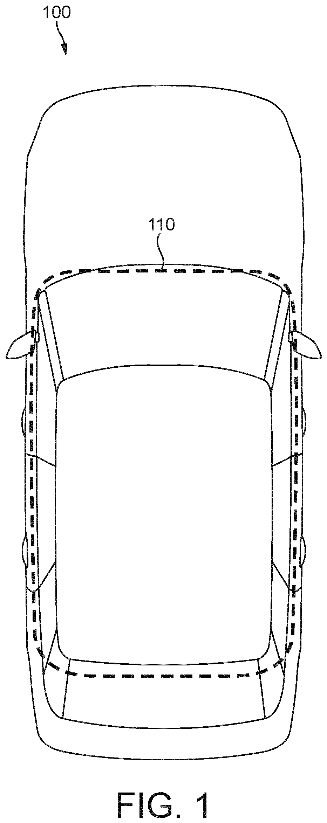

Figure 1 shows a vehicle 100 in which the invention may be used. The vehicle 100 comprises a cabin 110 which defines an internal space of the vehicle allocated for the driver, passengers and storage. It is desirable that the environment within the cabin 110 be controlled to be comfortable for the driver and passengers, as well as to ensure a clear view out of the windscreen and windows (which may be prone to misting depending on the temperature and humidity conditions inside and outside of the vehicle). The cabin 110 may be considered to comprise a number of horizontal regions, such as front (to include the area containing the driver and front passenger(s)) and rear (to include the area containing rear passengers, and potentially a boot storage area). The cabin 110 may also be considered to comprise a number of vertical regions, such as upper (to include area containing the upper body (torso, arms, head) of the driver and passengers) and lower (to include area containing the lower body (legs and feet) of the driver and passengers).

The cabin 110 may be serviced by a variety of vents, each capable of delivering air into a different region (horizontal and/or vertical) of the vehicle cabin 110. Specific areas of the vehicle cabin 110 may be serviced by controlling the rate of air flow through a vent servicing that area and/or by adjusting the direction of one or more vents. For example, a first group of vents may comprise one or more face vents for directing air onto the face and upper body of a driver or front passenger, and one or more indirect vents for releasing air generally into the vehicle cabin without directly impacting the driver and/or passengers. The indirect vent may for example direct jets of air in a direction which does not directly impact the driver and/or passenger(s), and/or it may release air into the vehicle cabin 110 more diffusely than the direct jets. A second group of vents may comprise screen vents for directing air onto the windscreen and/or other cabin windows to provide a demisting function. A third groups of vents may release air into the vehicle footwell.

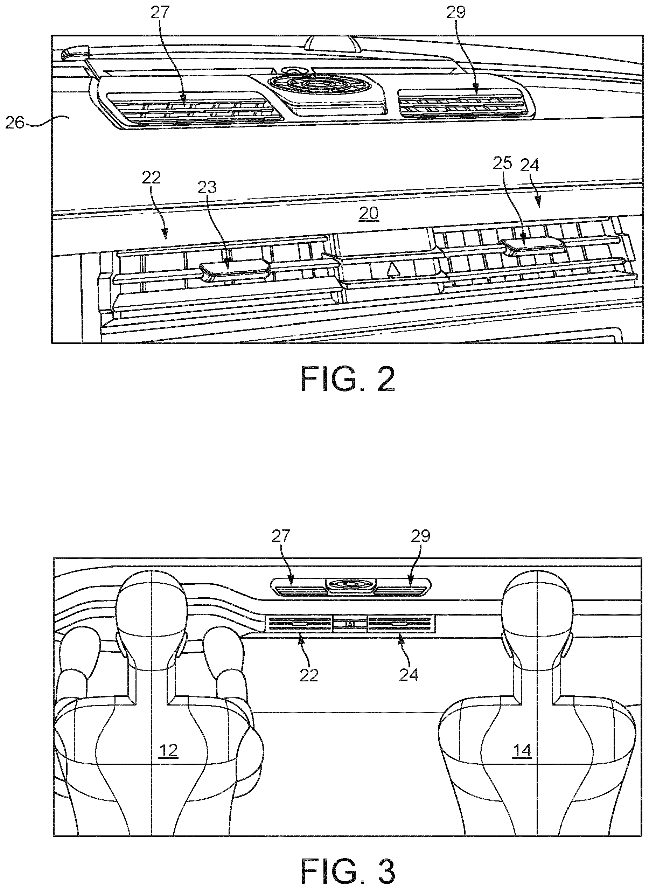

Referring to Figure 2, an example configuration of direct vents and indirect vents is shown. In particular, first and second direct vents 22, 24 are disposed on a generally vertical face of a central portion of an instrument panel 20. Indirect vents 27, 29 are disposed on a generally horizontal surface 26 above the instrument panel 20. The vents 22, 24, 27, 29 may form part of the first group of vents. The first group of vents may include further vents, for example at the far left and far right-hand side of the instrument panel 20 (not visible in Figure 2). The direction of air flow from the direct vents 22, 24 may be manually adjusted by manipulating handles 23, 25. In the present example no physical throttle control is provided on the direct vents 22, 24, and instead electronic control of this function is provided via a user interface (to be described in more detail below).

Referring to Figure 3, a position of the direct vents 22, 24 and the indirect vents 27, 29 is shown with respect to a driver 12, and a front passenger 14 (also referred to herein as Row 1 occupants). In particular, these vents are provided in a central region (laterally) of the vehicle cabin 110. The direct vents 22, 24 may be adjusted to direct air onto the face or upper bodies of the driver 12 and/or front passenger 14. In contrast, the indirect vents 27, 29 cannot be controlled to direct air onto the driver and passenger - the direction of air expulsion from the indirect vents is fixed, and simply releases air generally into the vehicle cabin without directly impacting on the driver 12 and front passenger 14. It will be appreciated that the air from the indirect vents 27, 29 is also not directed at any other passenger within the vehicle.

The indirect vents 27, 29 are different from screen vents both due to the way in which they are controlled (paired with direct vents), and also due to their directionality and/or air output type. In particular, screen vents output air directly at/onto the windscreen, preferably in a fan shape. In contrast, the airflow of the indirect vents does not directly come into contact with / touch the screen, instead it is directed below the rear-view mirror and between the Row 1 head rests (thereby passing between and not directly onto the driver and front passenger seats). In some examples the indirect vent may provide a more diffuse (wider angle) jet of air, or in other words, a generally vertical column of air, than the direct vents.

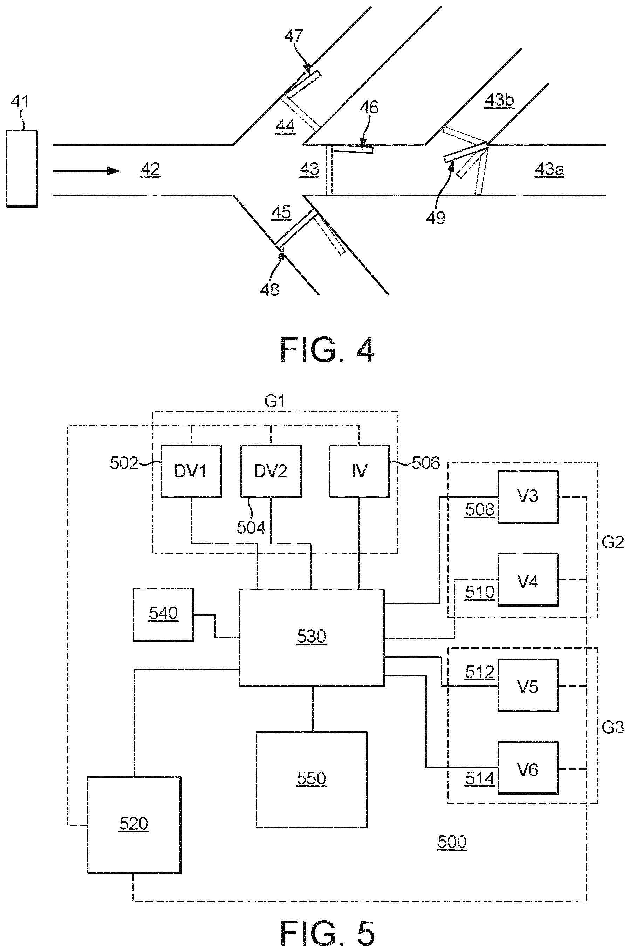

Referring to Figure 4, a simple vent and valve configuration shown, for an example set of vents, including direct and indirect vents of a first group, screen vents of a second group, and foot vents of a third group. It will be understood that this is merely one way in which the present technique may be implemented, and alternative implementations will be apparent to the skilled person. A main conduit 42 delivers air from a blower (fan) 41. The main conduit 42 splits into three branches, a first branch 43 towards the direct and indirect vents of the first group, a second branch 44 towards the screen vents, and a third branch 45 towards the foot vents. Each branch has an associated valve for controlling an amount of air to be delivered through that branch from the main conduit 42. In particular, the first branch 43 has a valve 46, the second branch 44 has a valve 47 and the third branch 45 has a valve 48. These valves may be opened and closed independently of each other, and may have plural levels of opening.

For example, each of the valves 46, 47, 48 may have a fully closed state, a 1/3 open state, a 2/3 open state, and a fully open state. It will be appreciated that the amount of air delivered via the main conduit 42 is finite. As a result, the three branches are required to share the same supply of air, which means that the more branches which are open, the maximum available air delivery for each open branch is reduced. However, due to conduit geometry, pressure variations and frictional losses, the opening and closing of different branches will not be expected to result in proportional increases/decreases elsewhere.

The first branch 43 comprises two sub-branches, a first sub-branch 43a and a second sub-branch 43b. The first sub-branch 43a delivers air to one or more direct vents, while the second sub-branch 43b delivers air to one or more indirect vents. Air from the first branch 43 into the sub-branches 43a, 43b is controlled by a valve 49 which is capable of closing and opening each sub-branch, but which is not capable (or at least not configured to) close both sub-branches at the same time. As a result, the valve 49 does not adjust the total air flow rate through the direct and indirect valves in combination (this remains substantially, or at least approximately the same), but instead controls the relative proportion of the air flow which is to be delivered to each of the direct vent (or set of direct vents) and indirect vent (or set of indirect vents). The significance of this is described elsewhere. In any case, it will be understood that the valve 46 controls the total airflow being delivered to the first group of (direct and indirect) vents, while the valve 49 controls the relative proportion of that total airflow which is delivered respectively to the direct vent(s) compared with the indirect vent(s). Note that the configuration of Figure 4 is purely illustrative, and the total and relative proportions of airflow being delivered to the direct and indirect vents can be achieved in many different ways.

The valves 46, 47, 48 are generally only open or closed for manual controls (they may be able to be opened partially by the automatic system for certain purposes) while the valve 49 defines the new 4 level direct/indirect vent control.

From the above, it will be appreciated that the direct vent(s) and the indirect vent(s) may be adjustable between a setting in which substantially all of the combined airflow rate from the direct vent(s) and the indirect vent(s) is through the direct vent(s) and a setting in which substantially all of the combined airflow rate from the direct vent(s) and the indirect vent(s) is through the indirect vent(s).

In a modified implementation of Figure 4, the valve 46 may be omitted, and separate valves provided instead of the valve 49, one each for the sub-branches 43a and 43b respectively. Together, the open state (amount) of the two separate valves together define both how much air is being delivered through the channel 43 in total, and of that total, the relative proportion being directed respectively to the direct vents and the indirect vents. For example, if both of the valves are open 1/3, this may (as an approximation) set the total air flow through the channel 43 to 1/3 of maximum, which is evenly distributed between the direct and indirect vents. If the valve for the sub-branch 43a is set to 1/3 and the valve for the sub-branch 43b is set to 2/3, the total air flow through the channel 43 may be approximately ½ of maximum, with twice as much of the airflow being delivered to the indirect vent compared with the direct vent. In more general terms, this implementation uses a pair of doors at the position of 49 in Figure 4, the pair of doors being calibrated to provide a desired (and user selected) airflow outcome of both distribution (relative proportion of airflow between direct/indirect) and vent openness (total combined airflow).

Referring to Figure 5, a schematic block diagram of the main components of a HVAC system 500 according to an embodiment of the invention is provided. The HVAC system 500 comprises a first group (G1) of vents including a first direct vent (DV1) 502, a second direct vent (DV2) 504 and an indirect vent (IV) 506. The first and second direct vents 502, 504 may be considered equivalent to the vents 22 and 24 in Figures 2 and 3, while the indirect vent 506 may be considered equivalent to the vents 27, 29 in Figures 2 and 3. In Figure 5 only a single indirect vent is shown, for simplicity. As mentioned earlier, the first group may comprise other vents in addition to this. The HVAC system 500 also comprises a second group (G2) of vents including a third vent (V3) 508 and a fourth vent (V4) 510. The HVAC system 500 also comprises a third group (G3) of vents including a fifth vent (V5) 512 and a sixth vent (V6) 514. All three groups of vents in this case are driven by a single blower 520. In alternative embodiments multiple blowers may be provided to supply air to different groups of vents.

The HVAC system 500 also comprises an electronic controller 530. This may be a dedicated controller for the HVAC system 500, or alternatively a subset of functionality of a general-purpose controller which additionally controls other aspects of the vehicle cabin operation, or wider operation of the vehicle. The controller 530 is electrically connected to the different vents (or more specifically to control valves, such as those described in Figure 4, associated with the different events), to control the rate of airflow through the vents, individually and/or in groups. The controller 530 is also electrically connected to the blower 520, in order to control the total air flow rate being delivered to the vents. Dashed lines in Figure 5 are indicative of the delivery of air from the blower 520 to the vents 502-512. A user interface 550 is also provided, permitting a user to influence the operation of the HVAC system 500. In particular, the user interface 550 permits the user to select cooling (or heating) modes, and to increase or reduce airflow rates through the vents, individually or in groups. The user interface also enables a user to set the temperature in the cabin, as well as to activate air conditioning and select between air recirculation and drawing in new air from outside of the vehicle. A solar sensor 540 is provided, which provides the controller 530 with a current solar loading on the vehicle, permitting the controller 530 to adjust operation to compensate for a change in solar load, for example in the manner described elsewhere herein.

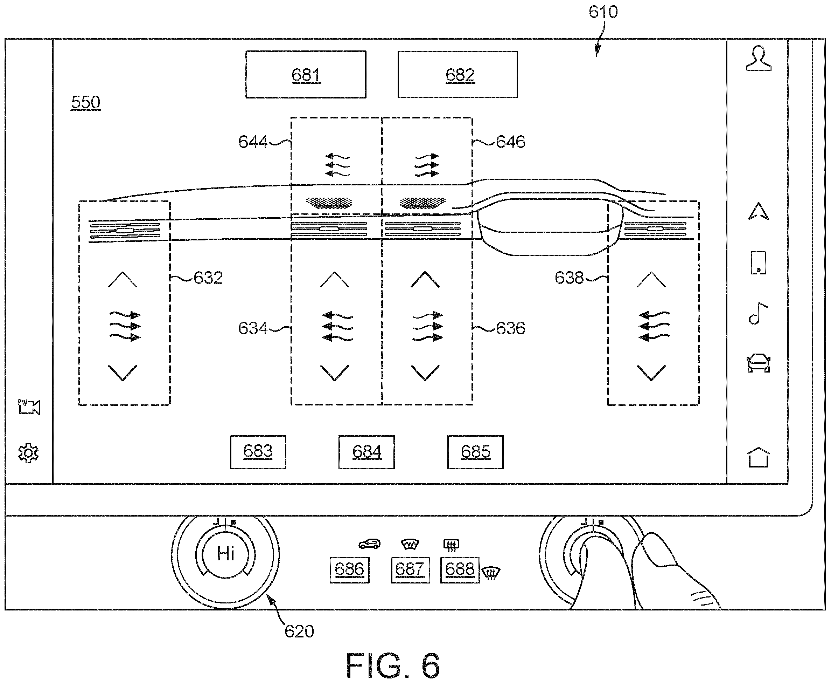

Figure 6 shows an example user interface 550. In the present case this comprises a touch screen panel 610 and a set of manual actuators (buttons and dials) 620. The manual actuators comprise a button 688 for activating the screen vents to rapidly demist the front windscreen, a button 687 to activate and deactivate air conditioning, and a button 686 to enter a maximum air conditioning mode 684. The touch screen panel 610 is able to switch to various different screens to control different aspects of the HVAC system 500, including air quality (button 685), climate (button 683) and vent control (button 684). The screen shown in Figure 6 relates to vent control, since this is the functionality to which the present technique relates. The touch screen panel 610, when controlling vents, is able to select between front and rear vents with controls 681 (front) and 682 (rear). The screen shown in Figure 6 relates to the front vents, since the present technique is exemplified herein using direct and indirect vents located in the front of the vehicle cabin 110. However, it will be understood that in alternative implementations, particularly for larger vehicles, that the rear portion of the vehicle cabin 110 could be similarly provided with direct and indirect vents controlled in accordance with the techniques described herein.

Six vents are graphically represented in the user interface screen shown in Figure 6. These include four direct vent representations 632, 634, 636, 638. The direct vent representations 632 and 638 correspond to direct vents provided to each extreme side of the instrument panel of the vehicle. The direct vent representations 632 and 638 provide for conventional control of the respective vents. In particular, each of these can be set to one of four settings, from closed to fully open (via two intermediate partially open settings). The current throttle state of each of these vents is indicated in the present case by a set of illuminated arrows, disposed just below the representation of the vent. As shown, the throttle state for each of vent representations 632 and 368 is fully open (three arrows illuminated). The throttle state for each of these vents represented by representations 632 and 638 can be adjusted (flow rate increased or decreased) with the up and down arrows, again disposed below the respective representations. Increasing or decreasing the airflow through either or both of the vents corresponding to representations 632 and 638 has minimal impact on the airflow through other vents of the HVAC system 500.

In contrast, the direct vent representations 634 and 636, provided in a central portion of the instrument panel (and corresponding to vents 22, 24 in Figures 2 and 3, and vents 502 and 504 in Figure 5) are paired, respectively, with indirect vent representations 644 and 646. More precisely, the direct vent representation 634 (and the direct vent associated with it) is paired with the indirect vent representation 644 (and the indirect vent associated with it). It can be seen that the direct vent representation 634 is provided with both an indication of the present airflow rate through that vent (in this case fully open), and user interface elements (up and down arrows) for increasing and decreasing the airflow rate. In contrast, the corresponding indirect vent representation 644 is (optionally) provided with an indication of the present airflow rate through that vent (in this case fully closed), but no user interface elements to adjust the airflow. In an alternative implementation, the user interface may not even include any indication of indirect vent status, or in some cases any indication of its presence at all. Because the direct vent and indirect vent represented by representations 634 and 644 respectively are paired, an increase in the airflow rate through the direct vent will automatically result in a corresponding decrease in the airflow rate through the paired indirect vent, to maintain substantially the same total airflow through the paired direct and indirect vents. As such, control of the indirect vent cannot be directly influenced by the user (from a user interface perspective), but instead results indirectly from the user adjusting the airflow rather through the corresponding direct vent. The same principles apply to paired direct vent 636 and indirect vent 646.

From the above it will be understood that the electronic user interface provides a facility for a user (driver or front occupant) to enter a user input for controlling the HVAC system. The user interface has a user input element visually associated with each direct vent, each providing a facility to adjust airflow through the respective direct vent. In contrast, the user interface lacks a user input element visually associated with the indirect vent. As a result, the airflow through the indirect vent is not directly controllable by the user through the user interface.

It will be appreciated that the above example uses a one:one correspondence between direct and indirect vents. In this example, if the direct vent is set to closed, the indirect vent will be set to fully open, if the direct vent is set to 1/3, the indirect vent will be set to 2/3, if the direct vent is set to 2/3, the indirect vent is set to 1/3, and if the direct vent is set to fully open, the indirect vent is set to closed. In a variation of this, the indirect vent may always release a baseline airflow into the vehicle cabin, even when the corresponding direct vent is fully open. However, even in this case the total flow rate between the paired direct and indirect vents is always substantially preserved.

In other examples, there may be a one:many, many:one or many:many correspondence between paired direct and indirect vents. For example, a single indirect vent may be paired with a plurality of direct vents. Alternatively, a single direct vent may be paired with a plurality of indirect vents. Alternatively, several direct vents may be paired, as a group, with several indirect vents. In these cases there will be a more complex relationship between the airflow to one (or more) direct vents being adjusted and the resulting airflow at the corresponding indirect vents, but the general principle that the total airflow through all vents in a paired group remains constant will still apply. By way of example, if two direct vents are paired with a single indirect vent, increasing the airflow through one of the direct vents will not influence the airflow through the other of the direct vents, but it will decrease the airflow through the indirect event such that the total airflow through the two direct vents and the indirect vent in combination is substantially constant. Similarly, if two indirect vents are paired with a single direct vent, an increase in the airflow through the direct vent will result in a decrease in airflow through both indirect vents - with the decrease being shared between the two indirect vents. Again, the total airflow through the two indirect vents and the one direct vent would remain the same before and after adjustment. If two direct vents are paired, as a group, with three indirect vents, then an increase in any one of the direct vents would cause a decrease in in airflow through all three indirect vents - with the decrease being shared between the three indirect vents, but no change to the airflow rate through the other direct vent.

It will be appreciated from the above that the present technique uses an indirect air vent to cool the upper cabin without air directly impacting the row 1 occupants. It also substitutes conventional mechanical vent shut offs with electronic shut offs controllable via an electronic user interface. This enables the system to:
(a) monitor the vent shut off status and manage airflow to maintain consistent output at open vents;
(b) monitor the vent shut off status and manage auto climate to deliver more air to other vents if needed;
(c) provide an option to override the user vent shut off selection in max cooling modes (discussed subsequently); and
(d) provide an ability to deny the user the ability to shut all face level vents when face mode is active (discussed subsequently).

In one embodiment, the user's manual distribution controls comprise on/off buttons (or other actuators) for each group of vents. As such, the user is able to choose face vents only, screen vents only or both face and screen vents (it will be appreciated that a further button or other actuator may be provided for foot vents, and/or other vent groups). It will be understood that the present technique (paired use of direct and indirect vents) only applies when the face vents are selected.

In face and screen both are fully open. This is different to the indirect/direct vent control which has 4 options, 100% direct, 66% direct/33% indirect, 33% direct/66% indirect, 100% indirect. Preferably, the direct and indirect vents are never both fully open as a direct result of manual control. Referring back to Figure 4, the airflow can change if the restriction of the ducts (such as the conduit 42 and the branches 43, 44, 45) changes. Accordingly, when switching from screen vents only, to screen and face vents, the airflow will be shared between the two ducts 43, 44, but the total airflow is usually slightly greater when two outlets are open so the airflow is not halved by having two branches open.

Occupants of a vehicle are interested both with level of comfort, but also operational consistency. By this we mean that a vehicle occupant can be unsettled by abrupt changes in HVAC operation which they do not specifically request. It is known to adjust the HVAC outputs (including fan speed and vent opening) to compensate for changes in solar load on the vehicle. However, where airflow directed on a vehicle occupant suddenly increases this can be an unsettling or annoying experience. Accordingly, in some embodiments the controller 530 is configured to monitor the output of a solar sensor, and in the case of an increase in solar load above a predetermined threshold (the threshold potentially being set in dependence on a current cabin temperature) automatically increase the air flow delivered into the vehicle cabin via the indirect vent(s) in preference to the direct vents. Preferably this involves keeping the airflow through the direct vents unchanged, and increasing the airflow through the indirect vent. It will be appreciated that, unlike with the user selected operation described above, this will result in an overall increase in airflow through the paired direct and indirect air vent(s). In some cases the blower speed may not be changed, with the desired increase in air flow being achieved by way of throttling the vents only. However, in other examples the blower speed will be increased while the vent throttles are adjusted to maintain the flow rate through the direct vent(s) and increase the flow rate through the indirect vent(s) (compared with the flow rates prior to adjustment). In practice this may mean closing the throttle on the direct vent to compensate for the increase in blower speed, while maintaining or opening the throttle state on the indirect vent (via which the increased air flow is to be introduced into the vehicle cabin).

If the blower speed is being increased for this purpose, all direct (group 1, and possibly other) vents should preferably be closed slightly to maintain air flow through these. In other words, in this scenario an increase in airflow through the indirect vent(s) is combined with closing the throttle/valves slightly on direct vents which are not paired with the indirect vent(s). It will be further appreciated that this step may not be required for vents for which an increase in output is unlikely to be noticed by the user, such as screen vents or footwell vents.

While this principle could be extended to other scenarios in which there is an abrupt change to cabin temperature (such as when a window is opened to go through a toll booth), it is particularly applicable to scenarios in which the change happens without driver involvement, since in such scenarios changes in HVAC operation will be unexpected.

From the above, it will be understood that the electronic controller may be responsive to an automated temperature adjustment request (for example generated in response to a detected change in solar load on the vehicle) to adjust the rate of air flow through the indirect vent without substantially adjusting the rate of airflow through the direct vent. The temperature adjustment may be achieved by increasing the blower speed while partially closing the direct vents to maintain the rate of airflow through the direct vent. As an alternative to detecting a change in solar load, the automated temperature adjustment request could be generated in response to a temperature change in the vehicle cabin.

The controller is typically operable in a plurality of air distribution modes. Each air distribution mode utilises one or more of the various groups of vents identified above. Each mode defines which vents are activated, and optionally a blower speed and a temperature. A mode may also specify a relative distribution of airflow between the direct and indirect vents, in the case that the face level vents are active in that mode. Both manual and automatic modes may be provided. Manual modes may include activation of screen vents, activation of face vents (to include the indirect vents), activation of the foot level vents, or any combination of the three. For any given manual mode the user is able to adjust fan speed and temperature (heating or cooling). Automatic modes may include a standard air conditioning mode, which simply activates the cooling compressor without specifically influencing vent states, a "Face" mode which may close all foot and screen vents and open the face level (Group 1) vents, but keep the blower speed and temperature at a current level/state, a "Max cooling" mode which may set the temperature to a minimum value, set the blower to maximum and open all face level (Group 1) vents, a "Max Fan" mode which may open all vents and set the blower to maximum. The "Max cooling" mode is an example predetermined cooling (or heating) mode which may cause the controller to override the current direct vent airflow settings (while saving those current settings for later use) and set the direct vent airflow rate to a maximum value (and thus the corresponding indirect rates to a minimum (for example, closed) value). Once the Max cooling mode (or other predetermined cooling or heating mode) is deactivated, the controller is preferably configured to return the direct vent airflow settings (and by extension the indirect ones) to the (stored) state they were in prior to the maximum cooling mode being initiated. While in a predetermined cooling (or in some cases heating) mode such as the Max cooling mode, the controller may inhibit user intervention to reduce airflow through the direct vent. In certain modes (or optionally in all modes) the system may prevent the user from turning off all face level vents - at most permitting the user to deactivate the direct vents, but not the indirect vents. In addition to the above predetermined modes, which utilise the direct/indirect vents, other modes may not - such as a predetermined demist/defrost mode which uses the screen vents only.

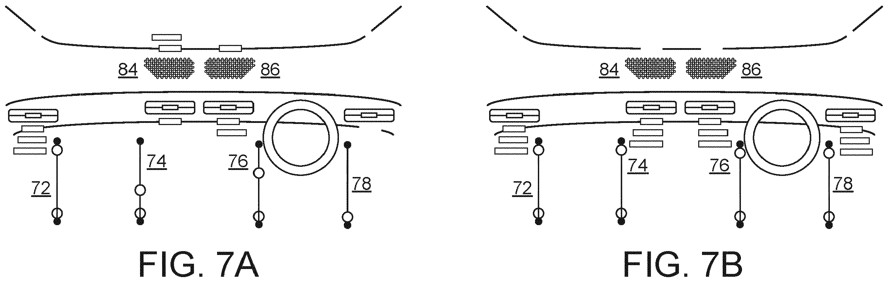

Figure 7 shows one example mode transition. On the left-hand side of Figure 7, the HVAC system is in an initial mode (which is not Max AC mode), with four direct vents set to various speeds. In particular, direct vent 72 is set to fully open, direct vent 74 is set to 1/3 open, direct vent 76 is set to 2/3 open and direct vent 78 is set to closed. Direct vent 74 has a corresponding indirect vent 84, which is resultingly set to 2/3 open, while direct vent 76 has a corresponding indirect vent 86, which is resultingly set to 1/3 open. On the right-hand side of Figure 7, the HVAC system is in the Max AC mode, in which the indirect vents 84, 86 are set to a minimum, while all four direct vents 72, 74, 76, 78 are set to a maximum. With this transition, the change to Max AC mode has involved setting all direct vents to maximum, to maximise rapid cooling of the Row 1 occupants, and consequently minimising the indirect vent output (preferably to zero). When Max AC mode is discontinued, the previous vent settings may be automatically restored (including, specifically, the relative proportion of airflow delivered via the paired direct and indirect vents).

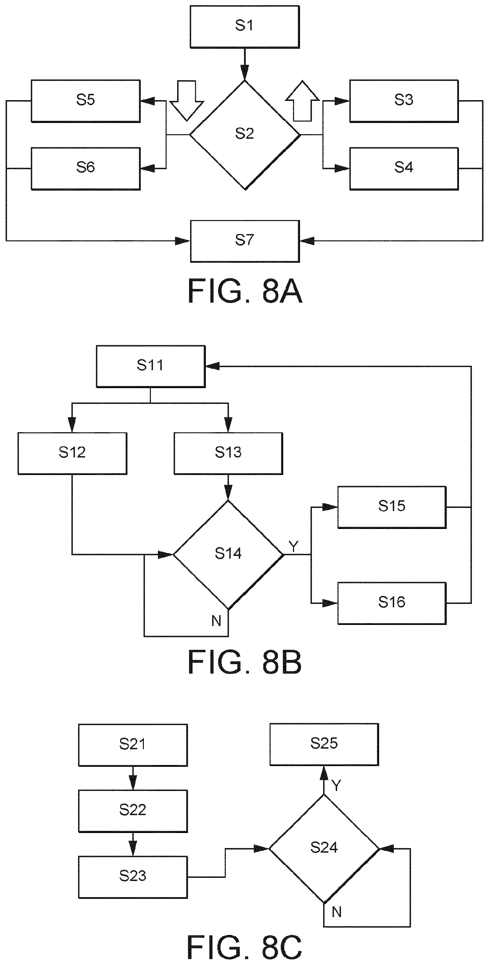

Figure 8A is a schematic flow diagram illustrating the actions taken by the controller 530 in the event of a user controlling the direct vents via the user interface 550. At a step S1, a direct vent adjustment request is received by the controller 530 (in response to a user interacting with the user interface 550). At a step S2, it is determined whether the adjustment request is a request to increase the output of the direct vent, or to decrease the output of the direct vent. If the request is to increase the output of the direct vent, then a step S3 to increase the output of the direct vent and a step S4 to correspondingly decrease the output of the associated/linked indirect vent are carried out in parallel, so that the total airflow (into the cabin) through the two vents in combination is substantially preserved. The process then ends at a step S7. If at the step S2 it is determined that the request is to decrease the output of the direct vent, then a step S5 to decrease the output of the direct vent and a step S6 to correspondingly increase the output of the associated/linked indirect vent are carried out in parallel, so that the total airflow (into the cabin) through the two vents in combination is substantially preserved. The process then ends at a step S7.

Figure 8B is a schematic flow diagram illustrating the actions taken by the controller 530 in the event of an automated temperature adjustment request being generated (based on sensed solar loading or cabin temperature for example). At a step S11 the automated temperature adjustment request is generated. In response to the automated temperature adjustment request, a step S12 in which the blower (fan) speed is increased (to increase the total combined airflow through the direct and indirect vents), and a step S13 in which the direct vents are (partially) closed to reduce the relative proportion of airflow through the direct vents, are carried out in parallel. The closure amount of the direct vents at the step S13 is substantially or at least approximately sufficient to compensate for the increase in airflow due to the step S12, such that the airflow through the direct vents is substantially or approximately unchanged. At a step S14 it is determined whether the automated temperature adjustment request is terminated - for example due to the solar loading or cabin temperature reducing to below a threshold, or after a timeout period. If the request is not terminated, the blower and vent settings remain at the level set at the steps S12 and S13. Once the request is terminated, then at a step S15 the blower speed is returned to its previous setting (that is, the fan speed in operation prior to receipt of the automated temperature adjustment request) and in parallel the direct vent is opened to compensate at a step S16. These settings then remain in place until a further automated temperature adjustment request or a user initiated change. In this way, the user experiences the same airflow onto their face or body throughout an automated cooling process.

Figure 8C is a schematic flow diagram illustrating the actions taken by the controller 530 in the event of a predetermined cooling mode being initiated by the user (for example by interacting with the user interface 550). At a step S21 the controller 530 receives a signal from the user interface 530 indicating that the system is to initiate the predetermined cooling mode. At a step S22 the current vent (and potentially blower and temperature) settings are stored for later use. At a step S23 the direct vents 22, 24 are set to maximum airflow (and optionally the blower set to maximum), with the result that the airflow via the indirect vents 27, 29 is minimised. Subsequently, when at a step S24 the predetermined cooling mode is exited (for example based on another user input), then at a step S25 the stored vent (and optionally blower/temperature) settings are restored. While in the predetermined cooling mode, the user may be inhibited from reducing the direct vent 22, 24 output.

It will be appreciated that various changes and modifications can be made to the present invention without departing from the scope of the present application.

## Claims

1. A HVAC system for a vehicle cabin, comprising:
a direct vent for directing air towards an occupant of the vehicle cabin and an indirect vent for introducing an airflow into the vehicle cabin, the airflow not being directly incident on an occupant of the vehicle cabin; and
an electronic controller, responsive to a user input to adjust a relative proportion of airflow through the direct vent and the indirect vent while substantially maintaining the combined rate of airflow through the direct vent and the indirect vent.

2. A HVAC system according to claim 1, wherein the adjustment comprises increasing a rate of air flow through one of the direct vent and the indirect vent, and correspondingly decreasing a rate of air flow through the other of the direct vent and the indirect vent, and optionally wherein the increase in rate of airflow is achieved by opening the vent and the decrease in rate of airflow is achieved by closing the vent.

3. A HVAC system according to any preceding claim, wherein the indirect vent is disposed on a top portion of an instrument panel of the vehicle cabin, and releases air generally upwardly into the vehicle cabin, and/or
wherein the direct vent and the indirect vent are adjustable between a setting in which substantially all of the combined airflow rate from the direct vent and the indirect vent is through the direct vent and a setting in which substantially all of the combined airflow rate from the direct vent and the indirect vent is through the indirect vent.

4. A HVAC system according to any preceding claim, comprising an electronic user interface for entering the user input, the user interface having a user input element visually associated with the direct vent, the user input element providing a facility to adjust airflow through the direct vent.

5. A HVAC system according to claim 4, wherein the user interface lacks a user input element visually associated with the indirect vent, or wherein the airflow through the indirect vent is not directly controllable by the user through the user interface.

6. A HVAC system according to any preceding claim, wherein the electronic controller is responsive to an automated temperature adjustment request to adjust the rate of air flow through the indirect vent without substantially adjusting the rate of airflow through the direct vent, and optionally wherein the temperature adjustment is achieved by increasing the blower speed while partially closing the direct vents to maintain the rate of airflow through the direct vent.

7. A HVAC system according to claim 6, wherein the automated temperature adjustment request is generated in response to a detected change in solar load on the vehicle, or in response to a temperature change in the vehicle cabin.

8. A HVAC system according to any preceding claim, wherein the direct vent and the indirect vent are part of a first group of vents, the first group of vents additionally comprising one or more further direct vents and/or one or more further indirect vents, and optionally
wherein airflow through the first group of vents is driven by a common blower, and/or optionally comprising a second group of vents for introducing air into a bottom portion of the vehicle cabin and/or a third group of vents for directing air onto an interior of a windscreen of the vehicle.

9. A HVAC system according to claim 8, wherein the airflow rate through the indirect vent cannot be adjusted to zero unless the total air flow through the first group of vents is zero, or unless the air flow rate through the corresponding direct vent is at a maximum value.

10. A HVAC system according to any preceding claim, wherein the airflow rate through the indirect vent cannot be manually adjusted independently of the airflow rate of the direct vent, and/or
wherein during manual adjustment of the vents, airflow rate through the indirect vent is substantially inversely proportional to the airflow rate through the direct vent for a given blower speed.

11. A HVAC system according to any preceding claim, wherein the electronic controller is operable in a plurality of air distribution modes, each air distribution mode utilising one or more of the first and/or second and/or third groups of vents.

12. A HVAC system according to claim 11, wherein the electronic controller is configured, when initiating a predetermined cooling mode, to override the current direct vent airflow settings and set the direct vent airflow rate to a maximum value, and optionally wherein the electronic controller is configured, when exiting the predetermined cooling mode, to return the direct vent airflow settings to the state they were in prior to the maximum cooling mode being initiated.

13. A HVAC system according to claim 11, wherein the electronic controller is configured, while in a predetermined cooling or heating mode, to inhibit user intervention to reduce airflow through the direct vent.

14. A vehicle comprising a HVAC system according to any preceding claim.

15. A method of controlling a HVAC system having a direct vent for directing air towards an occupant of the vehicle cabin and an indirect vent for introducing air into the vehicle cabin without directly impacting an occupant of the vehicle cabin, the method comprising:
responsive to a user input, adjusting a relative proportion of airflow through the direct vent and the indirect vent while substantially maintaining the combined rate of airflow through the direct vent and the indirect vent.
